# EUROPEAN PATENT APPLICATION

(11) **EP 2 765 059 A1**
(43) Date of publication of application: **13.08.2014**
(21) Application number: 14153612.8
(22) Date of filing: 03.02.2014
(51) Int. Cl.: B62D 3/12

(54) **Steering system**

(30) Priority: 06.02.2013 JP 2013021481
(71) Applicant: JTEKT CORPORATION, Osaka-shi Osaka 542-8502 (JP)
(72) Inventor: Nakayama, Yohei, Osaka-shi, Osaka 542-8502 (JP)
(74) Representative: Winter, Brandl, Fürniss, Hübner, Röss, Kaiser, Polte - Partnerschaft

(57) **Abstract**

A steering system (1) includes: pinion teeth (2a) coupled to a steering shaft (102) to transmit steering torque; pinion teeth (4a) that transmit assist torque based on the steering torque; a rack shaft (3) that meshes with the pinion teeth (2a) at a first meshing portion (31) and meshes with the pinion teeth (4a) at the second meshing portion (32); a tubular rack housing (30) that accommodates the rack shaft (3); and a rack bushing (5) that supports the rack shaft (3) in the rack housing (30). The rack busing (5) supports the rack shaft (3), at a position between the first meshing portion (31) and the second meshing portion (32).

## Description

### BACKGROUND OF THE INVENTION

### 1. Field of the Invention

The invention relates to a steering system.

### 2. Description of Related Art

As a steering system including a rack-and-pinion mechanism, there has been conventionally known an electric power steering system that generates assist torque based on steering torque generated by a rotating operation of a steering wheel, on the basis of an output from a motor, thereby assisting a driver in performing an operation of the steering wheel. See, for example, Japanese Patent Application Publication No. 2008-87535 and Japanese Patent Application Publication No. 2001-173756.

In a steering system described in Japanese Patent Application Publication No. 2008-87535, an assist mechanism including an electric motor and a speed reducer is provided on a steering column. Steering torque generated by a rotating operation of a steering wheel and assist torque generated by the assist mechanism are transmitted to a pinion shaft of a rack-and-pinion mechanism, and a rack shaft that meshes with the pinion shaft is moved along the vehicle-width direction of a vehicle. The rack shaft is accommodated in a tubular rack housing, and supported by rack bushings arranged at opposite end portions of the rack housing.

In a steering system described in Japanese Patent Application Publication No. 2001-173756, an assist mechanism including an electric motor and a speed reducer is provided outside a rack housing, and a rack shaft is configured to mesh with both a steering pinion that transmits steering torque and an auxiliary pinion that transmits assist torque generated by the assist mechanism.

In the steering system described in Japanese Patent Application Publication No. 2008-87535, the rack bushings are arranged at the opposite end portions of the rack housing. Therefore, two rack bushings are required for one steering system. Further, the two rack bushings need to be fitted to the rack housing during manufacturing, which increases the number of man-hours.

### SUMMARY OF THE INVENTION

The inventor studied the way to reduce the number of rack bushings, and obtained the finding that, in a steering system configured such that a rack shaft meshes with both a first gear that transmits steering torque and a second gear that transmits assist torque, it is possible to stably support the rack shaft using only one rack bushing by optimizing the position at which the rack bushing is arranged. Based on the finding, the inventor made the invention.

One object of the invention is to provide a rack-and-pinion-type steering system in which a rack shaft meshes with both a first gear that transmits steering torque and a second gear that transmits assist torque, and which is configured so as to make it possible to make the number of support members smaller than that in the case where a rack shaft is supported at both end portions of a rack housing, while stably supporting the rack shaft.

A steering system according to an aspect of the invention includes: a first gear coupled to a steering shaft to transmit steering torque; a second gear that transmits assist torque having a magnitude based on the steering torque; a rack shaft that meshes with the first gear at a first meshing portion and meshes with the second gear at a second meshing portion; a tubular rack housing that accommodates the rack shaft; and a support member that supports the rack shaft in the rack housing. The support member supports the rack shaft, at a position between the first meshing portion and the second meshing portion.

In the steering system according to the above-described aspect, the rack shaft may have helical teeth formed at the first meshing portion and helical teeth formed at the second meshing portion, and the helical teeth at the first meshing portion and the helical teeth at the second meshing portion may be formed such that a radial component of a load generated due to the steering torque transmitted via the first gear and a radial component of a load generated due to the assist torque transmitted via the second gear act in the same direction.

In the steering system according to the above-described aspect, the support member may be configured to support the rack shaft, at a position closer to the second meshing portion than the first meshing portion.

With the steering system according to the above-described aspect, it is possible to make the number of support members smaller than that in the case where a rack shaft is supported at both end portions of a rack housing, while stably supporting the rack shaft.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic view schematically illustrating a steering system according to an embodiment of the invention;
FIG. 2 is a partially cutaway view illustrating part of a rack housing and its surroundings;
FIG. 3 is a sectional view taken along the line A-A in FIG. 2 and illustrating the configuration of a meshing portion, at which a first pinion shaft and a rack shaft mesh each other at a first meshing portion;
FIG. 4 is a sectional view taken along the line B-B in FIG. 2 and illustrating the configuration of a meshing portion, at which a second pinion shaft and the rack shaft mesh each other at a second meshing portion;
FIG. 5 is a perspective view illustrating a rack bushing;
FIG. 6A is a cross-sectional view illustrating the state where the rack bushing is accommodated in the rack housing and taken along a cross section orthogonal to the axial direction of the rack shaft;
FIG. 6B is a sectional view illustrating the state where the rack bushing is accommodated in the rack housing and taken along the line C-C in FIG. 6A; and
FIG. 7 is an explanatory view illustrating forces transmitted to the rack shaft by the first pinion shaft and the second pinion shaft, in the form of vectors.

### DETAILED DESCRIPTION OF EMBODIMENTS

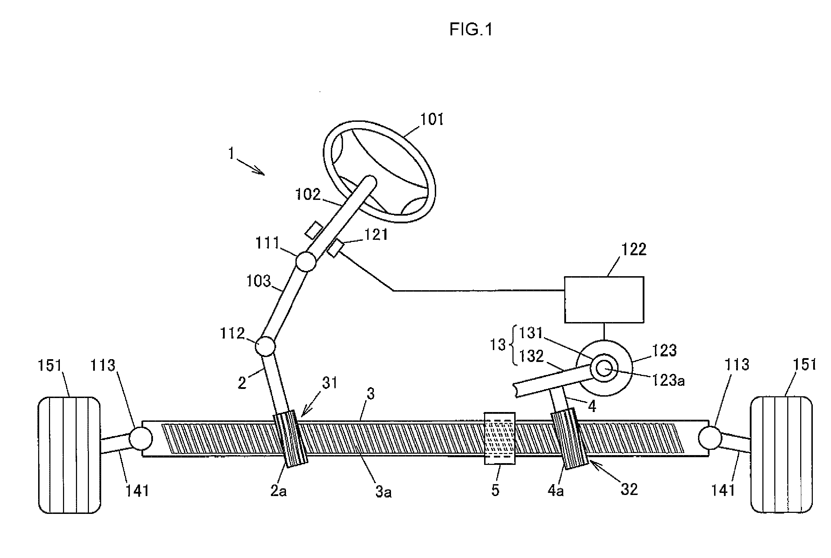

Hereinafter, an embodiment of the invention will be described with reference to FIG. 1 to FIG. 7. FIG. 1 is a schematic view schematically illustrating the configuration of a steering system 1 according to the embodiment of the invention. The steering system 1 includes: a steering shaft 102 having one end to which a steering wheel 101, which is rotated by a driver, is fixed; an intermediate shaft 103 coupled to the steering shaft 102 via a first universal joint 111; a first pinion shaft 2 coupled to the intermediate shaft 103 via a second universal joint 112; and a rack shaft 3 that meshes with the first pinion shaft 2. Each of the first and second universal joints 111, 112 is, for example, a cardan joint.

The steering system 1 includes: a steering torque sensor 121 that detects a steering torque applied to the steering shaft 102; a controller 122 that outputs a motor current based on the steering torque detected by the steering torque sensor 121; an electric motor 123 that generates torque using the motor current output from the controller 122; a speed reducer 13 that reduces the speed of rotation transmitted from a rotary shaft 123a of the electric motor 123; and a second pinion shaft 4 that transmits the torque output from the speed reducer 13 to the rack shaft 3 as assist torque based on the steering torque. The speed reducer 13 includes a worm 131 fixed to the rotary shaft 123a of the electric motor 123, and a worm wheel 132 that meshes with the worm 131. The second pinion shaft 4 is fixed to the worm wheel 132 so as to rotate together with the worm wheel 132.

Right and left tie rods 141 are coupled to opposite end portions of the rack shaft 3 via ball joints 113. The right and left tie rods 141 are coupled to right and left steered wheels 151. When the rack shaft 3 moves along the vehicle-width direction (the lateral direction of a vehicle), the right and left tie rods 141 pivot with respect to the rack shaft 3 and thus the right and left steered wheels 151 are steered.

Pinion teeth 2a are formed on an outer peripheral face of one end portion of the first pinion shaft 2. The pinion teeth 2a (an example of a first gear according to the invention) are coupled to the steering shaft 102 to transmit steering torque to the rack shaft 3. Pinion teeth 4a are formed on an outer peripheral face of one end portion of the second pinion shaft 4. The pinion teeth 4a (an example of a second gear according to the invention) transmits assist torque based on the steering torque to the rack shaft 3.

The pinion teeth 2a of the first pinion shaft 2 mesh with rack teeth 3a of the rack shaft 3, at a first meshing portion 31. The pinion teeth 4a of the second pinion shaft 4 mesh with the rack teeth 3a of the rack shaft 3, at a second meshing portion 32. The rack teeth 3a are formed as helical teeth of which the tooth trace is inclined with respect to the axial direction and the radial direction of the rack shaft 3. The first pinion shaft 2 and the second pinion shaft 4 obliquely mesh with the rack shaft 3 based on the inclination of the rack teeth 3a. The direction of the inclination of the rack teeth 3a at the first meshing portion 31 is the same as that at the second meshing portion 32. Because the rack teeth 3a are the helical teeth, it is possible to transmit torque smoothly and to enhance the meshing strength.

The rack shaft 3 is supported by a rack bushing 5, which may function as a support member, at a position between the first meshing portion 31 and the second meshing portion 32. The rack bushing 5 supports the rack shaft 3 at a position closer to the second meshing portion 32 than the first meshing portion 31. Details of the rack bushing 5 will be described later.

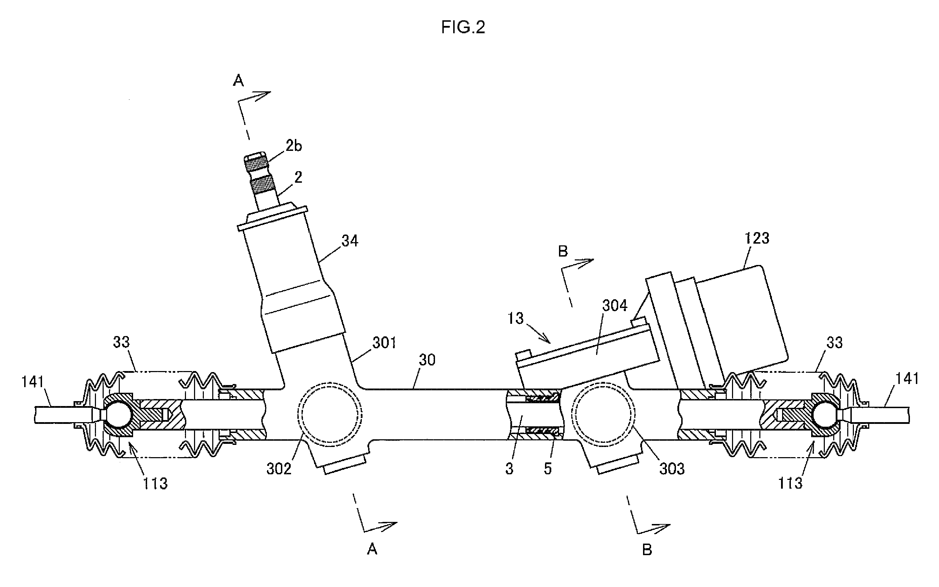

FIG. 2 is a partially cutaway view illustrating a tubular rack housing 30, which accommodates the rack shaft 3 such that the rack shaft 3 is movable in the axial direction, and its surroundings.

In the rack housing 30, the rack bushing 5 is arranged radially outward of the rack shaft 3. The rack bushing 5 is interposed between an inner peripheral face of the rack housing 30 and the outer peripheral face of the rack shaft 3. The movement of the rack bushing 5 relative to the rack housing 30 is restricted, and an inner peripheral face of the rack bushing 5 slides with respect to the rack shaft 3.

Extensible boots 33 having a bellows configuration are provided at opposite end portions of the rack housing 30. Each of the boots 33 accommodates the ball joint 113 and part of the tie rod 141.

A first tubular protruding portion 301, which extends outward along the first pinion shaft 2, is formed on the rack housing 30, and a cover member 34 that covers part of the first pinion shaft 2 is attached to an outer periphery of the tubular protruding portion 301. Serrations 2b, used to couple the first pinion shaft 2 to the second universal joint 112, are formed on one end portion of the first pinion shaft 2, which is exposed on the outside of the cover member 34. The rack housing 30 is provided with a second tubular protruding portion 302 and a third tubular protruding portion 303 that are located near the first meshing portion 31 and the second meshing portion 32 (illustrated in FIG. 1), respectively, and that protrude in a direction perpendicular to the sheet on which FIG. 2 is drawn and away from a person who sees FIG. 2. Further, the rack housing 30 is provided with a speed reducer accommodating portion 304 that accommodates the worm 131 and the worm wheel 132 constituting the speed reducer 13.

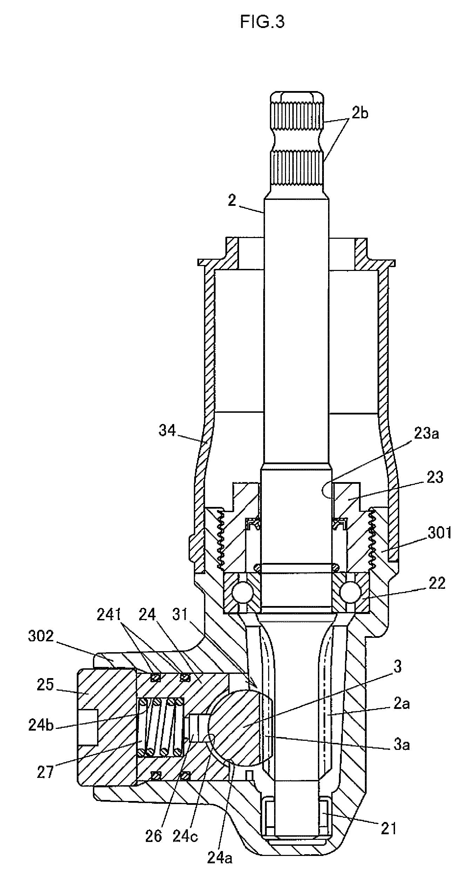

FIG. 3 is a sectional view taken along the line A-A in FIG. 2 and illustrating the configuration of the meshing portion, at which the first pinion shaft 2 and the rack shaft 3 mesh each other, and its surroundings.

The first pinion shaft 2 is supported at two positions, between which the pinion teeth 2a are located, by a needle roller bearing 21 and a ball bearing 22 that are arranged in the rack housing 30. The needle roller bearing 21 is arranged at a bottom portion of the rack housing 30, and the ball bearing 22 is arranged in the first tubular protruding portion 301. An opening of the first tubular protruding portion 301 is closed by a lid member 23 having an insertion hole 23a through which the first pinion shaft 2 is passed.

A cylindrical guide member 24 is movably accommodated in the second tubular protruding portion 302. Two O-rings 241 that are interposed between an outer peripheral face of the guide member 24 and an inner peripheral face of the second tubular protruding portion 302 are fitted to the outer peripheral face of the guide member 24. An opening of the second tubular protruding portion 302 is closed by a guide retaining member 25. The guide retaining member 25 restricts movement of the guide member 24 toward the outside of the second tubular protruding portion 302.

A concave guide face 24a having an inner peripheral face that conforms to the outer peripheral face of the rack shaft 3 is formed in one end portion of the guide member 24. A spring accommodating hole 24b that opens toward the guide retaining member 25 is formed in the other side end portion of the guide member 24. Further, a stepped fitting hole 24c that opens at the guide face 24a and the spring accommodating hole 24b is formed in the guide member 24.

A pressing member 26 that presses the rack teeth 3a of the rack shaft 3 against the pinion teeth 2a of the first pinion shaft 2 is arranged in the fitting hole 24c of the guide member 24. A compression spring 27 is arranged in the spring accommodating hole 24b. Pressing force in such a direction that the rack teeth 3a are meshed with the pinion teeth 2a, which is generated by the compression spring 27, is applied to the pressing member 26 via the guide member 24.

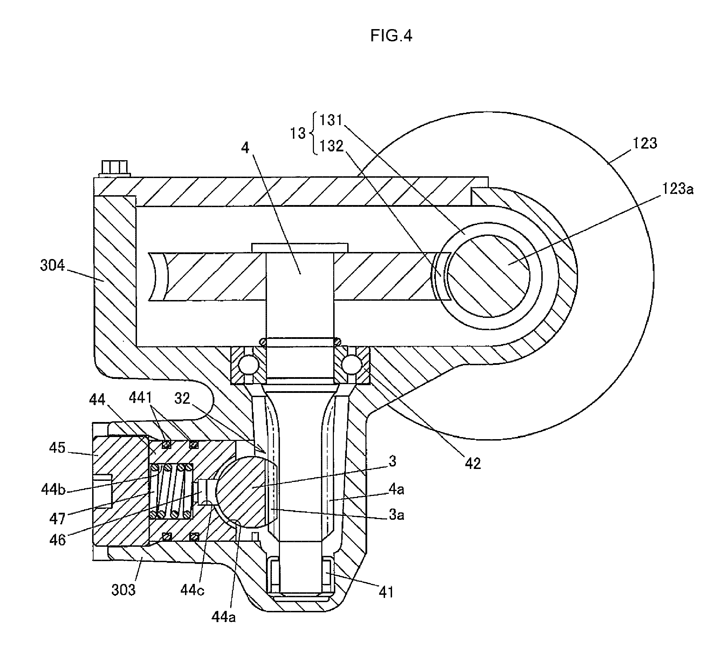

FIG. 4 is a sectional view taken along the line B-B in FIG. 2 and illustrating the configuration of the meshing portion, at which the second pinion shaft 4 and the rack shaft 3 mesh each other, and its surroundings.

The worm 131 and the worm wheel 132 are accommodated in the speed reducer accommodating portion 304 of the rack housing 30. The second pinion shaft 4 fixed to the worm wheel 132 is supported, at positions on respective sides of the pinion teeth 4a, by a needle roller bearing 41 and a ball bearing 42.

A portion of the rack shaft 3, which is at the second meshing portion 32, is pressed against the second pinion shaft 4 with the same configuration as that at a portion of the rack shaft 3, which is at the first meshing portion 31. That is, a cylindrical guide member 44 having a concave guide face 44a with an inner peripheral face that conforms to the outer peripheral face of the rack shaft 3, a spring accommodating hole 44b, and a fitting hole 44c is accommodated in the third tubular protruding portion 303 so as to be movable in the third tubular protruding portion 303, and an opening of the third tubular protruding portion 303 is closed by a guide retaining member 45.

A pressing member 46 is arranged in the fitting hole 44c of the guide member 44. The pressing member 46 receives pressing force from a compression spring 47 accommodated in the spring accommodating hole 44b, and presses the rack teeth 3a of the rack shaft 3 against the pinion teeth 4a of the second pinion shaft 4.

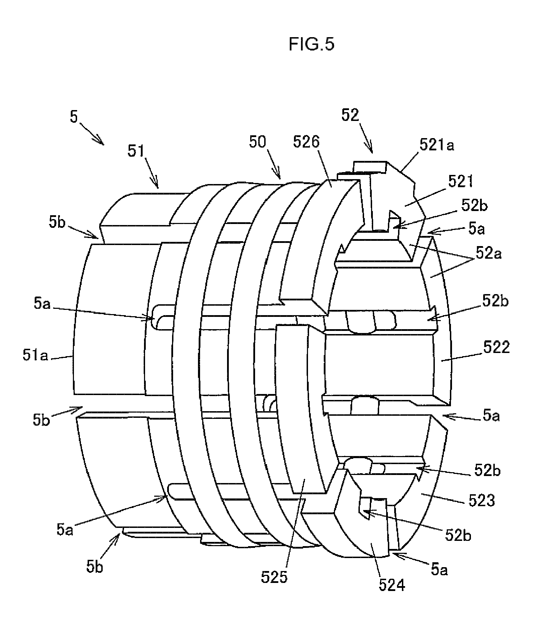

FIG. 5 is a perspective view illustrating the rack bushing 5. The rack bushing 5 is made of resin having elasticity and formed into a cylindrical shape.

The rack bushing 5 is a single-piece member having a small-diameter portion 51, a large-diameter portion 52, and an intermediate portion 50 that have different outer diameters. The outer diameter of the small-diameter portion 51 is smaller than the outer diameter of the intermediate portion 50, and the outer diameter of the large-diameter portion 52 is larger than the outer diameter of the intermediate portion 50. The small-diameter portion 51 is formed at one axial end portion of the rack bushing 5 and the large-diameter portion 52 is formed at the other axial end portion of the rack bushing 5 such that the intermediate portion 50 is located between the large-diameter portion 52 and the small-diameter portion 51. Two O-rings 500 are fitted to the intermediate portion 50 along an outer peripheral face thereof.

The rack bushing 5 has a plurality of (six in the present embodiment) first slits 5a that extend in the axial direction from an axial end face 52a on the large-diameter portion 52 side to the small-diameter portion 51-side end portion of the intermediate portion 50, and a plurality of (six in the present embodiment) second slits 5b that extend in the axial direction from an axial end face 51a on the small-diameter portion 51 side to the large-diameter portion 52-side end portion of the intermediate portion 50. The first slits 5a and the second slits 5b are alternately formed at equal intervals in the circumferential direction of the rack bushing 5. Because the first slits 5a and the second slits 5b are formed, the rack bushing 5 is allowed to expand and contract in the radial direction.

In the present embodiment, the large-diameter portion 52 is split into first to sixth arc pieces 521 to 526 by the six first slits 5a. A groove 52b formed to be continuous with a corresponding one of the second slits 5b is formed in an inner peripheral face of each of the arc pieces 521 to 526. Among the first to sixth arc pieces 521 to 526, the first arc piece 521 and the fourth arc piece 524 that face each other across the central axis of the rack bushing 5 are formed so as to have an inner diameter smaller than that of the other arc pieces 522, 523, 525, 526. Further, a boss portion 521a protruding outward in the radial direction of the rack bushing 5 is formed on an outer periphery of the first arc piece 521.

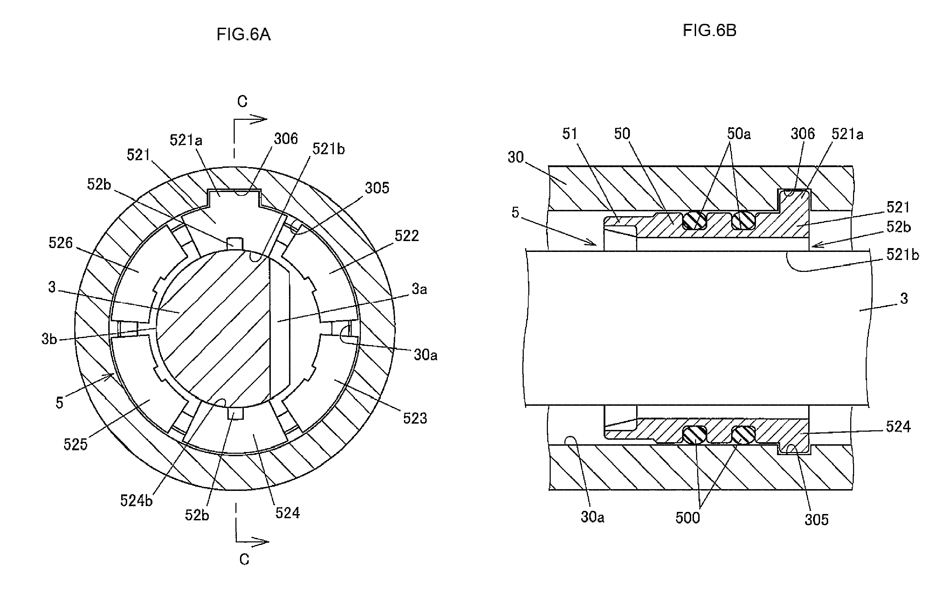

FIG. 6A and FIG. 6B illustrate the state where the rack bushing 5 is accommodated in the rack housing 30. FIG. 6A is a cross-sectional view illustrating the rack housing 30 taken along a cross section orthogonal to the axial direction of the rack shaft 3. FIG. 6B is a sectional view taken along the line C-C in FIG. 6A. The axial movement and the rotation of the rack bushing 5 are restricted in the rack housing 30.

The rack housing 30 has an annular first recess 305 that is recessed from an inner peripheral face 30a outward in the radial direction, and a second recess 306 that is formed at one circumferential position in the bottom face of the first recess 305 and that is recessed from the bottom face outward in the radial direction.

The large-diameter portion 52 of the rack bushing 5 is fitted in the first recess 305. Thus, the axial movement of the rack bushing 5 relative to the rack housing 30 is restricted. The boss portion 521a of the first arc pieces 521 of the rack bushing 5 is fitted in the second recess 306. Thus, the rotation of the rack bushing 5 relative to the rack housing 30 is restricted. That is, when the boss portion 521a is fitted in the second recess 306 of the rack housing 30, the rack bushing 5 is prevented from rotating.

As illustrated in FIG. 6A, when the outer peripheral face 3b of the rack shaft 3 comes into contact with an inner peripheral face 521b of the first arc piece 521 of the rack bushing 5 and an inner peripheral face 524b of the fourth arc piece 524 of the rack bushing 5, the rack shaft 3 is supported by the rack bushing 5. The rack teeth 3a of the rack shaft 3 face the second arc piece 522 and the third arc piece 523. The first arc piece 521 and the fourth arc piece 524 support opposite end portions of the rack teeth 3a in the teeth trace direction (the up-down direction in FIG. 6A) on the outer peripheral face 3b of the rack shaft 3.

The inner peripheral face 521b of the first arc piece 521 of the rack bushing 5 and the inner peripheral face 524b of the fourth arc piece 524 of the rack bushing 5 are elastically pressed against the outer peripheral face 3b of the rack shaft 3 due to elasticity of the two O-rings 500 fitted in circumferential grooves 50a of the intermediate portion 50. Thus, the rack bushing 5 elastically supports the rack shaft 3.

The rack bushing 5 is fitted to the rack housing 30 in the following manner. Before the rack shaft 3 is inserted into the rack housing 30, the widths of the first slits 5a and the second slits 5b are reduced to reduce the diameter of the rack bushing 5, and, in this state, the rack bushing 5 is inserted into the rack housing 30 from one end of the rack housing 30, and is moved under pressure to a predetermined position illustrated in FIG. 6. When the rack bushing 5 has been moved to this position, the diameter of the rack bushing 5 is increased due to the elasticity of the rack bushing 5, the large-diameter portion 52 is fitted into the first recess 305, and the boss portion 521a is fitted into the second recess 306.

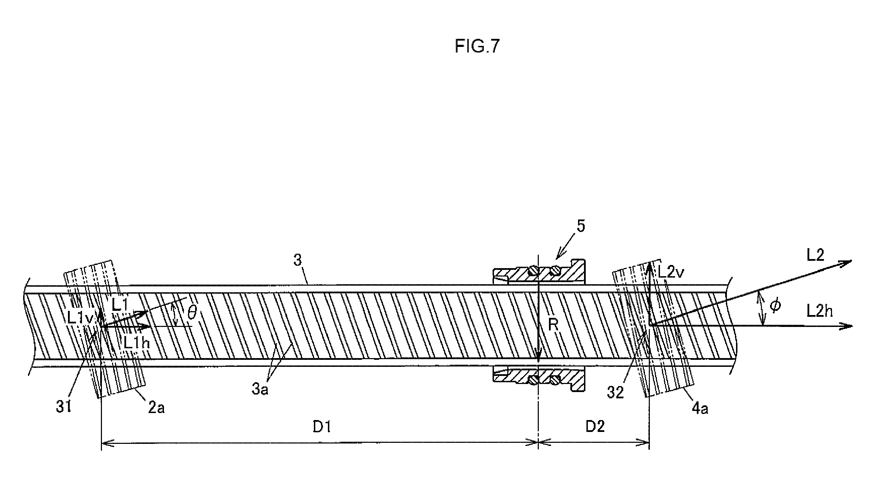

FIG. 7 is an explanatory view illustrating forces transmitted to the rack shaft 3 by the first pinion shaft 2 and the second pinion shaft 4, in the form of vectors. The following description will be provided on the assumption that the rack shaft 3 is arranged with its axial direction (longitudinal direction) being horizontal, the upper side in FIG. 7 corresponds to the upper side in the vertical direction, and the lower side in FIG. 7 corresponds to the lower side in the vertical direction. The axial direction of the rack shaft 3 is the lateral direction of FIG. 7.

The rack teeth 3a at the first meshing portion 31 and the rack teeth 3a at the second meshing portion 32 are inclined in the same direction with respect to the axial direction of the rack shaft 3, and the first pinion shaft 2 and the second pinion shaft 4 are also inclined in the same direction with respect to the axial direction of the rack shaft 3. A first load L1 that the rack shaft 3 receives from the pinion teeth 2a of the first pinion shaft 2 due to the steering torque acts on the rack shaft 3 with an inclination angle θ relative to the axial direction of the rack shaft 3 in accordance with the inclination of the first pinion shaft 2. A second load L2 that the rack shaft 3 receives from the pinion teeth 4a of the second pinion shaft 4 due to the assist torque acts on the rack shaft 3 with an inclination angle φ relative to the axial direction of the rack shaft 3 in accordance with the inclination of the second pinion shaft 4.

In the present embodiment, because the angle of inclination of the first pinion shaft 2 relative to the rack shaft 3 is the same as the angle of inclination of the second pinion shaft 4 relative to the rack shaft 3 and the inclination angle θ is equal to the inclination angle φ, the first load L1 and the second load L2 are vector loads in the same direction. That is, the rack teeth 3a at the first meshing portion 31 and the second meshing portion 32 are formed in the rack shaft 3 such that the first load L1 generated by the steering torque transmitted via the pinion teeth 2a of the first pinion shaft 2 and the second load L2 generated by the assist torque transmitted via the pinion teeth 4a of the second pinion shaft 4 act in the same direction.

An axial component L1h of the first load L1 and an axial component L2h of the second load L2 that proceed, along the axial direction of the rack shaft 3, on the face of the rack shaft 3 where the rack teeth 3a are formed serve as moving forces that move the rack shaft 3 in the axial direction. The magnitude of the axial component L1h is expressed by L1 x cosθ, and the magnitude of the axial component L2h is expressed by L2 x cosφ.

A radial component L1v of the first load L1 and a radial component L2v of the second load L2 that proceed along the radial direction of the rack shaft 3 serve as moving forces that move the rack shaft 3 in the radial direction. Because the direction of inclination of the rack teeth 3a at the first meshing portion 31 is the same as the direction of inclination of the rack teeth 3a at the second meshing portion 32, the radial component L1v and the radial component L2v act in the same direction. The magnitude of the radial component L1v is expressed by L1 x sinθ, and the magnitude of the radial component L2v is expressed by L2 x sinφ. In the example illustrated in FIG. 7, both the radial component L1v and the radial component L2v act so as to move the rack shaft 3 upward.

Upon reception of the radial component L1v and the radial component L2v, the rack bushing 5 applies a reaction force load R to the rack shaft 3. Thus, the balance between the radial components L1v, L2v and the reaction force load R applied by the rack bushing 5 is achieved, and the rack shaft 3 is stably supported at three points, that is, the first meshing portion 31, the second meshing portion 32, and the point of contact with the rack bushing 5. Even if the steering wheel 101 is steered in the opposite direction and the first load L1 and the second load L2 are generated so as to proceed in directions opposite to the directions illustrated in FIG. 7, the rack shaft 3 is stably supported at three points as described above.

Because the assist torque applied to the second pinion shaft 4 is larger than the steering torque applied to the first pinion shaft 2, the rack bushing 5 supports the rack shaft 3 at a position closer to the second meshing portion 32 than the first meshing portion 31 in the present embodiment. Because the rack shaft 3 is supported by the rack bushing 5 at a position closer to the second meshing portion 32 where the rack shaft 3 receives the relatively large radial component L2v, the rack shaft 3 is supported more stably than in a case where the rack bushing 5 is arranged so as to be closer to the first meshing portion 31 than the second meshing portion 32.

More preferably, for example, when the ratio between the steering torque and the assist torque is a : b, the rack shaft 3 should be supported by the rack bushing 5 at a portion including a position at which the ratio between a distance D1 from the first meshing portion 31 to the position and a distance D2 from the second meshing portion 32 to the position (D1 : D2) is equal to the ratio b : a. Thus, the rack shaft 3 is more stably supported.

While the steering system according to above-described embodiment of the invention has been described, the invention is not limited to the above-described embodiment, and may be implemented in various other embodiments within the scope of the invention.

For example, in the above-described embodiment, the inclination angle of the rack teeth 3a at the first meshing portion 31 and the inclination angle of the rack teeth 3a at the second meshing portion 32 are equal to each other. However, the invention is not limited to this configuration, and the inclination angle of the rack teeth 3a at the first meshing portion 31 and the inclination angle of the rack teeth 3a at the second meshing portion 32 may differ from each other. Even in this case, if the direction of inclination of the rack teeth 3a at the first meshing portion 31 and that of the rack teeth 3a at the second meshing portion 32 are the same, the same operations and advantageous effects as those in the above-described embodiment are obtained.

In the above-described embodiment, the rack teeth 3a are formed on the rack shaft 3 throughout the region between the first meshing portion 31 and the second meshing portion 32. Alternatively, a region where the rack teeth 3a are not formed may be present between the first meshing portion 31 and the second meshing portion 32.

In the above-described embodiment, the steering torque sensor 121 that detects a steering torque is provided on the outer periphery of the steering shaft 102. However, the invention is not restricted to this configuration, and a steering torque may be detected at the first pinion shaft 2, and a motor current may be controlled based on the detected steering torque.

## Claims

1. A steering system comprising:
a first gear coupled to a steering shaft to transmit steering torque;
a second gear that transmits assist torque having a magnitude based on the steering torque;
a rack shaft that meshes with the first gear at a first meshing portion and meshes with the second gear at a second meshing portion;
a tubular rack housing that accommodates the rack shaft; and
a support member that supports the rack shaft in the rack housing, wherein
the support member supports the rack shaft, at a position between the first meshing portion and the second meshing portion.

2. The steering system according to claim 1, wherein:
the rack shaft has helical teeth formed at the first meshing portion and helical teeth formed at the second meshing portion; and
the helical teeth at the first meshing portion and the helical teeth at the second meshing portion are formed such that a radial component of a load generated due to the steering torque transmitted via the first gear and a radial component of a load generated due to the assist torque transmitted via the second gear act in the same direction.

3. The steering system according to claim 1 or 2, wherein the support member supports the rack shaft, at a position closer to the second meshing portion than the first meshing portion.
